Europäisches Patentamt

European Patent Office

Office européen des brevets

(11) Veröffentlichungsnummer: **0 519 384 A1**

## (12) EUROPÄISCHE PATENTANMELDUNG

(21) Anmeldenummer: **92110093.9**

(22) Anmeldetag: **16.06.92**

(51) Int. Cl.5: **B65G 21/14**, B65H 29/36

(30) Priorität: **21.06.91 DE 4120469**

(43) Veröffentlichungstag der Anmeldung:
**23.12.92 Patentblatt 92/52**

(84) Benannte Vertragsstaaten:
**AT BE CH DE DK ES FR GB IT LI NL SE**

(71) Anmelder: **Mathias Bäuerle GmbH**
**Postfach 11 33**
**W-7742 St. Georgen/Schw.(DE)**

(72) Erfinder: **Helmstädter, Maximilian**
**Klosterring 10**
**W-7730 Villingen-Schwenningen(DE)**

(74) Vertreter: **Neymeyer, Franz, Dipl.-Ing. (FH)**
**Haselweg 20**
**W-7730 Villingen-Schwenningen 24(DE)**

(54) **Fördereinrichtung mit endlosen Förderbändern, insbesondere für Papierbogen od. dgl.**

(57) Bei einer Fördereinrichtung für Papierbogen od. dgl. mit mehreren endlosen Förderbändern (8,9), die über ortsfeste Antriebsrollen (18, 19) sowie über ortsfeste Rücklaufrollen (6) und über weitere gemeinsam verschiebbare Umlenkrollen (27, 28, 29, 30) geführt sind, besteht das Traggestell aus einer Gestellschiene (1), die sich in der Ebene der Rücklaufrollen (6) zwischen diesen und den Antriebsrollen (18, 19) erstreckt. Die Antriebsrollen (18, 19) sind in einer oberhalb der Gestellschiene (1) liegenden Ebene angeordnet. Als verstellbarer Gestellteil ist ein kurzer Schlitten (24) vorgesehen, der mittels Führungselementen und Klemmorganen auf der Oberseite der Gestellschiene (1) zwischen den Antriebsrollen (18, 19) und den Rücklaufrollen (6) stufenlos verstellbar und fixierbar ist. Die Antriebsrollen (18, 19), die Rücklaufrollen (6) und die Umlenkrollen (27, 28, 29, 30) sind jeweils paarweise beidseitig der Gestellschiene (1) angeordnet und mit zwei synchron laufenden Förderbändern (8, 9) versehen.

FIG.1

EP 0 519 384 A1

Die Erfindung betrifft eine Fördereinrichtung für Papierbogen od. dgl. mit mehreren endlosen Förderbändern, die über Antriebsrollen einer ortsfest am einen Ende eines im wesentlichen horizontalen Traggestells angeordnete Antriebswelle sowie über Rücklaufrollen einer ebenfalls ortsfest unterhalb und in einem festen Abstand von der Antriebswelle am anderen Ende des Traggestells angeordneten Lagerachse und über weitere Umlenkrollen geführt sind, die auf zwei an einem in Längsrichtung des Traggestells verstellbaren Gestellteil gelagerten Lagerachsen angeordnet sind, wobei sich die eine Lagerachse des verstellbaren Gestellteils in der Ebene der Antriebswelle befindet und die sich zwischen den Umlenkrollen dieser Lagerachse und den Antriebsrollen erstreckenden Förderbandabschnitte horizontale Fördertrums bilden und wobei die zweite Lagerachse des Gestellteils mit ihren Umlenkrollen unterhalb dieser Fördertrums gelagert ist.

Es ist bereits eine Fördereinrichtung der gattungsgemäßen Art bekannt (US 2 477 830), die dazu dient, von einer Druckmaschine ausgeworfenen bedruckte Platten oder große Bogen, die sonst nur von wenigstens zwei Arbeitern transportiert und abgelegt werden könnten, auf einem örtlich fixierten Stapel laufend abzulegen. Dabei ist es möglich, einzelne Papierbogen sowohl nacheinander als auch gemeinsam, schuppenförmig überlappt miteinander zu transportieren. Diese Fördereinrichtung weist eine Vielzahl von endlosen Förderbändern auf, die synchron über eine gemeinsame Antriebswalze, eine gemeinsame Rücklaufwalze und zwei Umlenkwalzen geführt sind, welche letztere in einem verstellbaren Gestellrahmenteil gelagert sind. Dieses Gestellrahmenteil ist auf der Seite der ortsfesten Umlenkwalze in einem im wesentlichen, in seiner Neigung jedoch einstellbaren Gestellrahmen in Längsrichtung verstellbar gelagert und stellt somit eine Verlängerung des Gestellrahmens dar. Die beiden verstellbaren Umlenkwalzen sind jeweils an den sich gegenüberliegenden Endabschnitten des verstellbaren Gestellrahmenteils angordnet und gelagert, so daß ihr Abstand voneinander etwa der Länge entspricht, um welche der Gestellrahmen durch das Gestellrahmenteil maximal verlängert werden kann. Es ist deshalb bei dieser Fördereinrichtung nicht möglich, die Fördertrums der Förderbänder auf eine Länge einzustellen, die gleich groß ist wie oder kleiner ist als die Länge des Gestellrahmens. Außerdem handelt es sich hierbei um eine relativ große und kostenträchtige Einrichtung in Großbauweise für große und schwere Druckbogen, sodaß sie für Anwendungen im Bürobereich zur Überbrückung kurzer Maschinenabstände nicht infrage kommen kann. Auch die für die Längsverstellung des Rahmengestellteils vorgesehen Gewindespindeln, die wegen der Größe und Schwere dieses Rahmengestellteils erforderlich sind, verteuern nicht nur den Preis sondern sie machen auch den Aufbau kompliziert und aufwendig.

Im Gegensatz dazu soll die erfindungsgemäße Fördereinrichtung zum horizontalen Transportieren von kleineren Papierbogen, z.B. des Formats DIN A4 oder DIN A3, von einer die Papierbogen ausgebenden Maschine zu einer die Bogen weiterverarbeitenden Maschiene in der Weise benutzbar sein, daß die horizontale Förderbahnlänge der Fördereinrichtung auf unterschiedliche Abstände zwischen den beiden Maschinen einstellbar ist.

Der Erfindung liegt deshalb die Aufgabe zugrunde, eine möglichst einfach handhabbare Fördereinrichtung der eingangs genannten Art in leichter Bauweise für den Einsatz im Bürobereich zu schaffen, deren Förderstrecke auf Längen eingestellt werden kann, die kürzer sind als die Gesamtlänge ihres Gestells.

Gelöst wird diese Aufgabe erfindungsgemäß durch die Kombination folgender Merkmale:

a) das Traggestell besteht aus einer Gestellschiene, die sich in der Ebene der Rücklaufrollen zwischen diesen und den Antriebsrollen erstreckt;

b) die Antriebsrollen sind in einer oberhalb der Gestellschiene liegenden Ebene angeordnet;

c) der verstellbare Gestellteil ist als kurzer Schlitten ausgebildet, dessen Länge etwa dem 2,5-fachen Durchmesser einer Umlenkrolle entspricht und der mittels Führungselementen und Klemmorganen auf der Oberseite der Gestellschiene zwischen den Antriebsrollen und den Rücklaufrollen stufenlos verstellbar und fixierbar ist,

d) die Antriebsrollen, die Rücklaufrollen und die Umlenkrollen sind jeweils paarweise beidseitig der Gestellschiene angeordnet und mit zwei synchron laufenden Förderbändern versehen,

e) im Schlitten sind die zwei parallelen Lagerachsen der Umlenkrollen in einem Abstand voneinander gelagert, der höchstens dem 1,5-fachen Durchmesser einer Umlenkrolle enspricht.

Der besondere Vorteil dieser erfindungsgemäßen Fördereinrichtung besteht darin, daß sie aufgrund ihrer leichten und kompakten Bauweise sehr leicht handhabbar ist und sich universell im Bürobereich für die Verarbeitung kleinerer Papierformate einsetzen läßt. Sie ist auch auf sehr einfache Weise auf unterschiedlich lange Förderstrecken einstellbar, und sie läßt sich beispielsweise zwischen zwei Papierbogen verarbeitenden Maschinen, die unterschiedlich weit auseinander angeordnet sind, einsetzen, wobei die Förderstrecke, d.h. das jeweils wirksame Fördertrum, sich zwischen einer nur wenige Zentimeter betragenden Minimallänge und einer nahezu die Gesamtlänge der Gestellschiene umfassendem Maximallänge stufenlos einstellen läßt. Die Erfindung hat außerdem den besonderen Vorteil, daß sich mit einer einzigen relativ schmalen Gestellschiene und dem darauf verstellbar angeordneten schmalen Schlitten eine relativ breite Förderbahn mit zwei synchron laufenden Förderbändern realisieren läßt, auf welchen die zu transportierenden Papierbogen eine gute Auflage haben und sicher mitgenommen werden.

Die Ausgestaltungen nach den Ansprüchen 2 bis 5 sind in sofern von Vorteil, als sie nicht nur einen einfach handhabbaren sondern auch funktionssicheren Aufbau des Verstellmechanismus bzw. der Fixiereinrichtung des Schlittens betreffen.

Anhand der Zeichnungen wird im folgenden ein Ausführungsbeispiel der Erfindung näher erläutert. Es zeigt:

Fig. 1      eine Fördereinrichtung für Papierbogen in teilweise geschnittener Seitenansicht I von Fig. 2;

Fig. 2      eine Draufsicht II aus Fig. 1;

Fig. 3      ein Schnitt III-III aus Fig. 1;

Fig. 4      den mit zwei Umlenkrollenpaaren versehenen Schlitten in teilweise geschnittener Draufsicht;

Fig. 5      einen Schnitt V-V aus Fig. 4;

Fig. 6      die Einzelteile des Schlittens in Exposionsdarstellung;

Fig. 7      eine Lagerbuchse in teilweise geschnittener Seitenansicht VIII aus Fig. 8;

Fig. 8      die Stirnansicht VIII aus Fig. 7;

Fig. 9      eine Schnittdarstellung IX-IX aus Fig. 5 ohne die Lagerwelle mit den beiden Umlenkwalzen und ohne den Spannhebel;

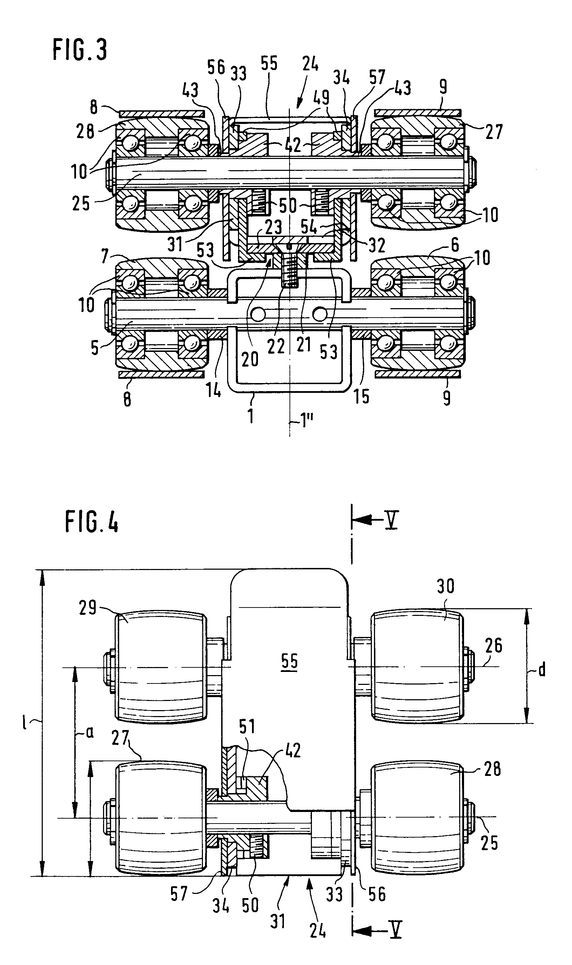

Die in der Zeichnung dargestellte Fördereinrichtung für Papierbogen od. dgl. weist als tragendes Element eine horizontal verlaufende, aus einem Rechteckrohr gebildete Gestellschiene 1 auf, die an ihrem einen Ende 2 mit einer stirnseitig befestigten vertikalen Tragplatte 3 versehen ist, welche die Gestellschiene 1 nach oben überragt. Im gegenüberliegenden Endabschnitt 4 dieser Gestellschiene 1 ist oberhalb ihrer horizontalen Mittelebene 1' (siehe Fig. 3) eine quer dazu verlaufende, horizontale Lagerachse 5 gelagert, die auf beiden Seiten der Gestellschiene 1 mit je einer Rücklaufrolle 6 bzw. 7 versehen ist. Die Lagerachse 5 ist um einen gewissen Betrag in Längsrichtung der Gestellschiene 1 federnd beweglich, so daß Förderbänder 8 und 9, die über die Rücklaufrollen 6 und 7 geführt sind, gespannt gehalten werden. Wie aus Fig. 3 ersichtlich ist, sind die beiden Rücklaufrollen 6 und 7 mittels Wälzlagern 10 leicht drehbar auf der Lagerachse 5 gelagert und durch Distanzhülsen 14 bzw. 15 von der Gestellschiene 1 in einem gewissen seitlichen Abstand von einigen mm gehalten, so daß die Fördereinrichtung eine ausreichende Gesamtbreite b erhält, die etwa der dreifachen Breite b' der Gestellschine 1 entspricht.

In einer oberhalb der Gestellschiene 1 liegenden Ebene ist in einem am oberen Ende der Tragplatte 3 befestigten Lagerklotz 16 eine Antriebswelle 17 drehbar gelagert, die mit einem nicht dargestellten Drehantrieb in Verbindung steht und auf welcher beidseitig der Gestellschiene 1 bzw. des Lagerklotzes 16 drehfest mit ihr verbundene Antriebsrollen 18 und 19 angeordnet sind. Auf der Oberseite der Gestellschiene 1 ist als T-förmiges Führungsprofil 20 auf mehreren in ihrer vertikalen Mittelebene 1'' angeordneten Distanzhülsen 21 mittels Schrauben 22 eine Klemmleiste 23 angeordnet, auf welcher ein Schlitten 24 mit zwei parallel zur Antriebswelle 17 bzw. Lagerachse 5 verlaufenden Lagerachsen 25 und 26 in Längsrichtung verstellbar angeordnet ist.

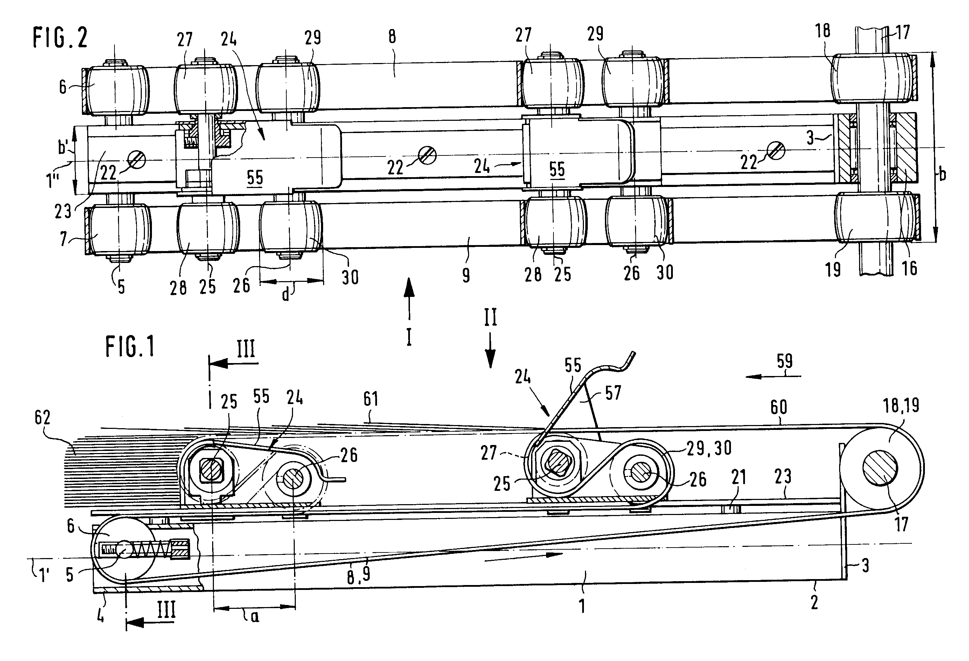

Dieser Schlitten 24 ist auf der Gestellschiene 1 zwischen der Antriebswelle 17 und der Lagerachse 5 der Rücklaufrollen 5, 6 stufenlos verstellbar. Er ist um einen möglichst großen Verstellweg innerhalb der Gestellschiene 1 zu erreichen möglichst kurz ausgebildet. Die Lagerachsen 25, 26 sind möglichst nahe beieinander angeordnet. In den Fig. 1 und 2 ist der Schlitten 24 in zwei verschiedenen Arbeitspositionen dargestellt, wobei er in der linken Position unverschiebbar fixiert und in der rechten Position unverriegelt, also verschiebbar, dargestellt ist.

Auf den beiden Lagerachsen 25, 26 sind jeweils beidseitig des Schlittens 24 bzw. der Gestellschiene 1 fluchtend mit den Rücklaufrollen 6 und 7 bzw. den Antriebsrollen 18 und 19 jeweils zwei Umlenkrollen 27 und 28 bzw. 29 und 30, mittels Walzlagern 10 gelagert, wobei im folgenden die Umlenkrollen 27 und 28 zur leichteren Verständlichkeit als erste Umlenkrollen und die Umlenkrollen 29 und 30 als zweite Umlenkrollen bezeichnet sind.

Der Schlitten 24, der etwa die gleiche Breite **b'** hat wie die Gestellschiene 1, weist als tragendes Element einen Träger 31, der aus einer horizontalen Bodenplatte 32 mit zwei seitlichen, parallel zueinander verlaufenden, vertikalen Wandelementen 33 und 34 besteht, in denen jeweils paarweise koaxiale Bohrungen 35 und 36 bzw. 37 und 38 (Fig. 6) zur Lagerung der Lagerachsen 25 und 26 angeordnet sind. Dabei entsprich der Abstand **a** der beiden Lagerachsen 25, 26 bzw. der diese aufnehmenden Bohrungen 35/36 und 37/38 etwa dem 1,5-fachen Durchmesse **d** einer der unter sich gleichen Umlenkrollen 27 bis 30. Auf diese Weise läßt sich eine sehr geringe Gesamtlänge **l** des Schlittens 24 erreichen, die etwa dem 2,5-fachen des Durchmessers **d** einer Umlenkrolle 27 bis 30 entspricht. Die minimal einstellbare Länge der Fördertrums 60 der beiden Förderbänder 8, 9 entspricht somit etwa der Summe aus dem doppelten Durchmesser einer Umlenkrolle 27 bis 30 und dem halben Durchmesser einer Antriebsrolle 18, 19. Wenn man annimmt, daß die Antriebsrollen 18, 19 den gleichen Durchmesser **d** aufweisen wie die Umlenkrollen 27 bis 30, dann entspricht die Minimallänge der Fördertrums 60 etwa der Länge **l** des Schlittens 24, also etwa dem 2,5-fachen Durchmesser **d**.

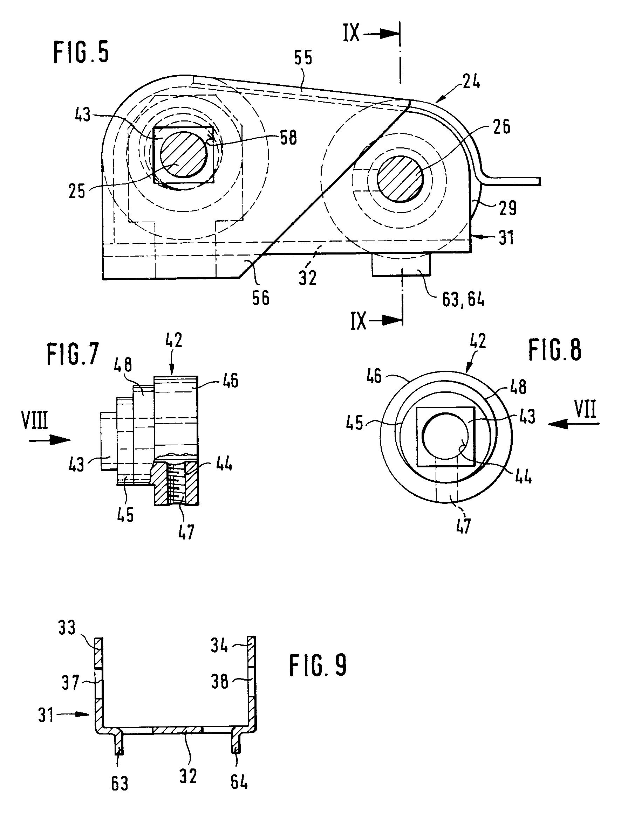

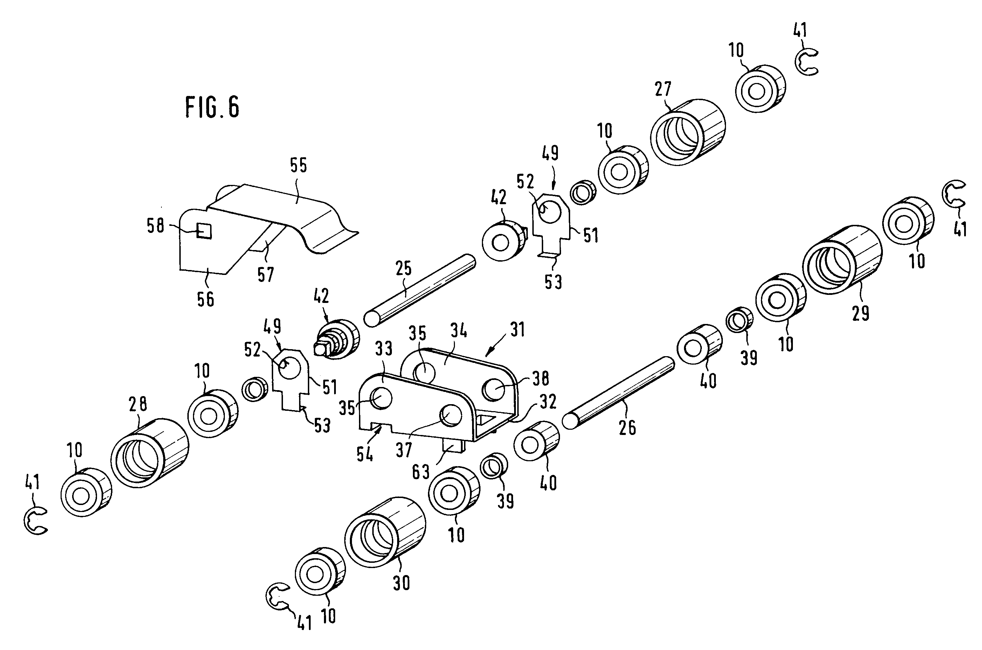

Die die zweiten Umlenkrollen 29, 30 tragende Lagerachse 26 ist unmittelbar in den Bohrungen 37 und 38 der Wandelemente 33 und 34 gelagert und durch Distanzhülsen 39 und 40 sowie durch Sicherungsscheiben 41 axial fixiert. Die Lagerachse 25 ist mittels zweier Lagerbuchsen 42 in den Bohrungen 35 und 36 des Trägers 31 gelagert. Die Lagerbuchsen 42 sind gleich ausgebildet, jedoch spiegelbildlich zueinander auf der Lagerachse 25 angeordnet. In den Fig. 7 und 8 ist eine solche Lagerbuchse 42 als Einzelteil dargestellt. Sie weist am einen Ende einen Vierkant 43 als unrundes Schlüsselprofil auf, an den sich ein zylindrischer, konzentrisch zu einer zentralen Bohrung 44 angeordneter Lageransatz 45 anschließt, der jeweils von der Bohrung 37 bzw. 38 zentrierend aufgenommen ist. Zwischen einem zylindrischen, etwas breiteren und im Durchmesser größeren Endabschnitt 46, der eine radiale Gewindebohrung 47 aufweist, und dem Lageransatz 45 befindet sich ein Exzenteransatz 48 auf dem jeweils ein Klemmorgan 49 gelagert ist (Fig. 3 und 6). Die beiden Lagerbuchsen 42 sind jeweils durch Madenschrauben 50 auf der Lagerachse 25 befestigt bzw. gegen eine Achsialverschiebung gesichert und im übrigen so auf der Lagerachse 25 angeordnet, daß ihre zylindrischen, zur Axialbohrung 44 konzentrischen Lageransätze 45 in den Bohrungen 35 bzw. 36 des Trägers 31 sitzen.Dadurch ist auch die Lagerachse 25 gegenüber dem Träger 31 axial fixiert.

Als Klemmorgane 49 sind zwei Zuglaschen 51 vorgesehen, die mittels einer zylindrischen Bohrung 52 auf den Exzenteransätzen 48 der beiden Lagerbuchsen 42 gelagert sind. Diese Zuglaschen 51 sind jeweils mit abgewinkelten Klemmzungen 53 versehen, welche die Längsränder der Klemmleiste 23 untergreifen und dabei zugleich eine Schlitzöffnung 54 der Bodenplatte 32 des Trägers 31 durchragen (Fig. 3). Auf diese Weise dienen die beiden Zuglaschen 51 zugleich als Führungselemente für den Schlitten 24 bzw. für den Träger 31. Die Bodenplatte 32 des Trägers 31 ist zusätzlich mit nach unten gerichteten Führungszungen 63 und 64 versehen, welche die Klemmleiste 23 der Gestellschiene 1 führend zwischen sich einschließen (siehe auch Fig. 9).

Zur Betätigung der als Zuglaschen 51 ausgebildeten Klemmorgane 49 ist ein Spannhebel 55 vorgesehen, der aus einem den Träger 31 des Schlittens 24 U-förmig übergreifenden Bügel besteht. Dieser Spannhebel 55 weist zwei vertikale Seitenwände 56 und 57 mit zueinander koaxialen quadratischen Durchbrüchen 58 zur formflüssigdrehsicheren Aufnahme der Vierkante 43 der beiden Lagerbuchsen 42 auf. Dabei ist die Winkellage des Exzenteransatzes 48 in Bezug auf den Vierkant 43 bzw. in Bezug auf die quadratischen Durchbrüchen 58 des Spannhebels 55 so getroffen, daß die Exzenteransätze 48 die Klemmungen 53 der beiden Klemmorgane 49 von unten klemmend gegen die Klemmleiste 23 ziehen, wenn der Spannhebel 55 die in Fig. 5 bzw. die in der linken Schlittenposition der Fig. 1 und 2 dargestellte nach unten geklappte Lage einnimmt. In der nach oben geklappten Lage hingegen, die in der rechten Position des Schlittens in den Fig. 1 und 2 dargestellt ist, ist die Klemmverbindung zwischen dem Schlitten und der Klemmleiste 23 der Gestellschiene 1 aufgehoben, und der Schlitten 24 kann somit stufenlos entlang der Gestellschiene 1 bzw. deren Klemmleiste 23 verschoben werden. Das Lösen und Fixieren des Schlittens 24 in verschiedenen Längspositionen ist somit durch einfache Schwenkbewegungen des Spannhebels 55 möglich.

Es ist aus Fig. 1 erkennbar, daß die zwischen den Antriebsrollen 18, 19 und den ersten Umlenkrollen 27, 28 des Schlittens 24 verlaufenden Förderbandabschnitte jeweils die eigentlichen Fördertrums 60 bilden und daß die zweiten Umlenkwalzen 29 und 30 des Schlittens 24 unterhalb dieser Fördertrums 60 angeordnet sind. Außerdem ist erkennbar, daß die Förderbänder 8 bzw. 9 jeweils S-förmig um die beiden Umlenkrollen 27, 29 bzw. 28, 30 herumgeführt und von den zweiten Umlenkrollen 29, 30 jeweils zu den Rücklaufrollen 6 bzw. laufen, von wo sie zu den Antriebsrollen 18, 19 zurückkehren.

Der Transport der Papierbogen, die von einer nicht dargestellten Einrichtung bei den Antriebsrollen 18, 19 auf das Fördertrum 60 übergeben werden, erfolgt in Richtung des Pfeiles 59, beispielsweise in einem Schuppenstrom 61, zu einem Bogenstapel 62, der nur eine begrenzte Bogenzahl aufnehmen kann. Von diesem Bogenstapel 62 können die einzelnen Papierbogen dann mittels einer Vereinzelungsvorrichtung laufend entnommen werden. Dabei ist erkennbar, daß die Auflageebene des Bogenstapels 62 etwa in der Höhe der Oberseite der Gestellschiene liegt.

Mit der beschriebenen Fördereinrichtung und einer entsprechend gesteuerten Antriebseinrichtung läßt sich also z. B. ein Bogenanleger einer Bogenverarbeitungsmaschine laufend mit Papierbogen versorgen.

Der Schlitten 24 läßt sich auf der Gestellschiene 1 zwischen den Antiebsrollen 18, 19 und den Rücklaufrollen 6, 7 stufenlos so verstellen und fixieren, daß zwischen einer Maximallänge der Fördertrums 60, die etwa der Länge der Gestellschiene 1 entspricht, und einer Minimallänge der Fördertrums 60, die etwa der Länge l des Schlittens 1 entspricht, jede beliebige Zwischenlänge mühelos eingestellt werden kann.

## Patentansprüche

1. Fördereinrichtung für Papierbogen od. dgl. mit mehreren endlosen Förderbändern (8,9), die über Antriebsrollen (18, 19) einer ortsfest am einen Ende eines im wesentlichen horizontalen Traggestells (1) angeordnete Antriebswelle (17) sowie über Rücklaufrollen (6, 7) einer ebenfalls ortsfest unterhalb und in einem festen Abstand von der Antriebswelle (17) am anderen Ende des Traggestells (1) angeordneten Lagerachse (5) und über weitere Umlenkrollen (27, 28, 29, 30) geführt sind, die auf zwei an einem in Längsrichtung des Traggestells (1) verstellbaren Gestellteil (24) gelagerten Lagerachsen (25, 26) angeordnet sind, wobei sich die eine Lagerachse (25) des verstellbaren Gestellteils (24) in der Ebene der Antriebswelle (17) befindet und die sich zwischen den Umlenkrollen (27, 28) dieser Lagerachse (25) und den Antriebsrollen (18, 19) erstreckenden Förderbandabschnitte horizontale Fördertrums (60) bilden und wobei die zweite Lagerachse (26) des Gestellteils (24) mit ihren Umlenkrollen (29, 30) unterhalb dieser Fördertrums (60) gelagert ist, **gekennzeichnet** durch die Kombination folgender Merkmale:

   a) das Traggestell besteht aus einer Gestellschiene (1), die sich in der Ebene der Rücklaufrollen (6, 7) zwischen diesen und den Antriebsrollen (18, 19) erstreckt;

   b) die Antriebsrollen (18, 19) sind in einer oberhalb der Gestellschiene (1) liegenden Ebene angeordnet;

   c) der verstellbare Gestellteil ist als kurzer Schlitten (24) ausgebildet, dessen Länge etwa dem 2,5-fachen Durchmesser einer Umlenkrolle (27 bis 30) entspricht und der mittels Führungselementen (20, 51) und Klemmorganen (49) auf der Oberseite der Gestellschiene (1) zwischen den Antriebsrollen (18, 19) und den Rücklaufrollen (6, 7) stufenlos verstellbar und fixierbar ist,

   d) die Antriebsrollen (18, 19), die Rücklaufrollen (6, 7) und die Umlenkrollen (27, 28, 29, 30) sind jeweils paarweise beidseitig der Gestellschiene (1) angeordnet und mit zwei synchron laufenden Förderbändern (8, 9) versehen,

   e) im Schlitten sind die zwei parallelen Lagerachsen (25, 26) der Umlenkrollen (27, 28, 29, 30) in einem Abstand voneinander gelagert, der höchstens dem 1,5-fachen Durchmesser einer Umlenkrolle (27 bis 30) enspricht.

2. Fördereinrichtung nach Anspruch 1, dadurch gekennzeichnet, daß die Gestellschiene (1) aus einem Rechteckrohr besteht und auf ihrer Oberseite ein sich in Längsichtung erstreckendes, T-förmiges Führungsprofil (23) aufweist, in welches Klemmorgane (49) des Schlittens (24), die mittels eines Spannhebels (55) betätigbar sind, formschlüssig eingreifen.

3. Fördereinrichtung nach Anspruch 1 od. 2, dadurch gekennzeichnet, daß der mit etwa der gleichen Breite wie die Gestellschiene (1) versehene Schlitten (24) einen Träger (31) aufweist, der aus einer horizontalen Bodenplatte (32) mit zwei seitlichen, parallel zueinander verlaufenden, vertikalen Wandelementen 33, 34) besteht, in denen die Lagerachsen (25, 26) der Umlenkrollen (27, 28, 29, 30) gelagert sind.

4. Fördereinrichtung nach einem der Ansprüche 1 bis 3, dadurch gekennzeichnet, daß die Klemmorgane (49) aus zwei jeweils mit einer abgewinkelten Klemmzunge (53) versehenen vertikalen Zuglaschen (51) bestehen, die jeweils mit einer passenden Bohrung (52) auf Exzenteransätzen (48) zweier Lagerbuchsen (42) gelagert sind, welche auf einer Lagerachse (25) der Umlenkrollen (27, 28) zwischen den Wandelementen (33, 34) des Trägers (31) angeordnet und drehfest mit dem Spannhebel (55) verbunden sind.

5. Fördereinrichtung nach Anspruch 2 oder 4, dadurch gekennzeichnet, daß der Spannhebel (55) aus einem den Träger (31) des Schlittens (24) U-förmig übergreifenden Bügel besteht, der zwei vertikale Seitenwände (56, 57) aufweist, die mit zueinander koaxialen, unrunden Durchbrüchen (58) zur formschlüssig-drehsicheren Aufnahme querschnittsmäßig angepaßter Ansätze (43) der beiden Lagerbuchsen (42) versehen sind.

FIG.2

6

27  24  29  8  27  29  18  17

b'
1"
22  22  24  55  22  3  b
23

7  9  5  28  25  26  30  28  25  26  30  19  16

d

I  II

FIG.1  III

59

62  25  55  24  61  24  55  57  60  18,19

27  29,30
26  25  26
6  21  23

1'  5  8,9  17

4  1  2

III  III

a

EP 0 519 384 A1

FIG.3

FIG.4

**FIG.5**

**FIG.7**

**FIG.8**

**FIG.9**

FIG.6

## EINSCHLÄGIGE DOKUMENTE

EP 92110093.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | DE - C - 509 128 (MIX UND GENEST) * Abbildung 1 * -- | 1 | B 65 G 21/14 B 65 H 29/36 |
| D,A | US - A - 2 477 830 (SANDBERG) * Fig. 3,4 * -- | 1 | |
| A | DE - A - 1 915 647 (DEMAG-LAUCHHAMMER) * Fig. 3,4 * --- | 1 | |

| | |
|---|---|
| | RECHERCHIERTE SACHGEBIETE (Int. Cl.⁵) |
| | B 65 G B 65 H |

Der vorliegende Recherchenbericht wurde für alle Patentansprüche erstellt.

| Recherchenort | Abschlußdatum der Recherche | Prüfer |
|---|---|---|
| WIEN | 21-09-1992 | BAUMGARTNER |